# FASCICULE DE BREVET EUROPEEN

(11) **EP 3 394 424 B1**
(45) Date de publication et mention de la délivrance du brevet: **27.11.2019**
(21) Numéro de dépôt: 15825620.6
(22) Date de dépôt: 24.12.2015
(51) Int. Cl.: F03B 13/14, F03B 13/24

(54) **DISPOSITIF DE RECUPERATION D'ENERGIE SUR DE LARGES SPECTRES DE HOULES**
VORRICHTUNG ZUR ENERGIEGEWINNUNG AUS EINEM BREITEN WELLENLÄNGENBEREICH
DEVICE FOR COLLECTING ENERGY FROM BROAD WAVE SPECTRA

(43) Date de publication de la demande: 31.10.2018
(73) Titulaire: Le Muet, Ivan, 75116 Paris (FR); Le Muet, Sébastien, 92150 Suresnes (FR)
(72) Inventeur: Le Muet, Ivan, 75116 Paris (FR); Le Muet, Sébastien, 92150 Suresnes (FR)
(74) Mandataire: Cabinet Netter
(86) Numéro de dépôt international: PCT/FR2015/053755
(87) Numéro de publication internationale: WO 2017/109301

(56) Documents cités:
- EP-A1- 2 944 801
- WO-A1-2015/102547
- FR-A1- 2 959 780

## Description

La présente invention concerne un dispositif permettant la récupération d'énergie provenant des vagues, ou de la houle, et plus généralement de toute fluctuation dynamique et locale d'ordre statistique qui anime la surface de tout plan d'eau de grande étendue soumis aux effets des intempéries.

Les propositions permettant la récupération d'une partie de l'énergie de la houle, en vue de leur conversion en énergie électrique, se sont multipliées ces vingt dernières années.

L'état de l'Art comprend aujourd'hui cinq familles principales de tels dispositifs, qui convertissent une fraction de l'énergie de la houle en énergie mécanique de rotation, laquelle permet la production de courant électrique grâce à un générateur. Chacune de ces familles présente ses limites et ses inconvénients.

Il existe des dispositifs à surverse, par exemple celui du document brevet WO 1996/000848. Ceux-ci créent une différence de hauteur d'eau, en faisant déferler des vagues par-dessus des parois d'une enceinte, dont l'arrête supérieure se situe à une altitude sensiblement supérieure à celle du niveau moyen du plan d'eau. L'interposition d'une turbine dans la veine d'eau retournant de l'enceinte à la mer permet la production d'électricité, grâce à cette différence de hauteur d'eau. Ce dispositif simple, sans pièce mécanique mobile autre que la turbine, présente toutefois des niveaux de production très modestes au regard de l'emprise dimensionnelle et de l'investissement qu'il nécessite. En effet, seules les composantes spectrales de la houle présentant une hauteur supérieure à la hauteur de surverse apportent au dispositif une fraction d'énergie. Les composantes à faibles longueurs d'ondes, dont la hauteur est plus réduite, ne sont pas exploitées. Une hauteur de surverse ne peut être choisie trop petite, puisqu'elle fixe directement l'énergie potentielle récupérable par volume d'eau admis. Par ailleurs, la turbine de conversion de l'énergie potentielle de l'eau ainsi récupérée en électricité est nécessairement immergée, et présente en conséquence tous les surcoûts de conception, de construction et de maintenance attachés à ce caractère immergé.

Il existe des dispositifs à flotteurs attachés par le fond, par exemple celui de US 6,140,712. Ces dispositifs actionnent des systèmes de pompes hydrauliques, par l'effet des forces développées par la montée et la descente des flotteurs, induites par le passage de la houle. Ces dispositifs comportent inévitablement des pièces mécaniques complexes, ainsi qu'un équipement hydraulique nécessairement immergé, lesquels présentent des coûts de conception, de fabrication et de maintenance élevés. D'autre part, leur inertie ne leur permet pas de récupérer l'énergie des composantes de spectres de houles de courtes longueurs d'ondes. Par ailleurs, leur implantation, de même que leur démantèlement, nécessitent généralement des travaux sous-marins conséquents d'un coût particulièrement élevé. Une variante de ce type de dispositif consiste en un bras oscillant émergé, à l'extrémité duquel est disposé un flotteur semi-immergé, et dont l'articulation actionne un vérin hydraulique lorsque la hauteur du flotteur varie sous l'effet de la houle. Ce dispositif est implanté sur une structure solidaire du fond ou du rivage, ou encore sur une plate-forme flottante de grande stabilité. Cette variante ne permet une récupération d'énergie qu'au voisinage immédiat de leur support, soit sur une emprise modeste.

Il existe des atténuateurs de surface semi immergés, par exemple celui de WO 2011/061546. Ces dispositifs sont constitués d'une succession d'ouvrages flottants reliés les uns aux autres par des articulations équipées de vérins hydrauliques. Ces vérins permettent la récupération d'énergie par mise en circulation d'un fluide hydraulique à chaque mouvement relatif d'un élément par rapport à l'autre. L'énergie est ensuite convertie en énergie mécanique de rotation par une turbine disposée sur le circuit hydraulique. Ces chapelets d'éléments flottants articulés sont généralement ancrés à une extrémité, de sorte qu'en l'absence de courant, ils s'orientent librement selon le sens de propagation principal de la houle. Leur efficacité est maximale lorsqu'ils sont soumis à une houle unidirectionnelle, monochromatique et de longueur d'onde voisine de deux fois la longueur individuelle d'un élément, et décroît fortement dès que la longueur d'onde de la houle s'écarte de cette valeur. De tels dispositifs sont par ailleurs peu efficaces dans le cas de houles conjuguées ou croisées, de même que si la direction principale de la houle ne coïncide pas avec la direction d'un éventuel courant local, qui détermine alors l'orientation du dispositif indépendamment de la direction de la houle. Par ailleurs, leurs coûts de construction et de maintenance sont élevés, en raison d'une part de la fragilité des systèmes d'articulations, et d'autre part des équipements hydrauliques internes par lesquels transite l'énergie récupérée avant d'être convertie en électricité.

Il existe aussi des dispositifs à volets oscillants, par exemple celui décrit dans US 2008/0191485. De tels dispositifs sont constitués de volets s'articulant sur une embase fixée au fond. Chaque volet oscille sous l'effet du ressac induit par la houle. Le mouvement du volet actionne des vérins hydrauliques, qui mettent en mouvement un fluide, qui à son tour entraîne une turbine. Une variante de cette famille de dispositifs est constituée de volets oscillants dont la partie supérieure comprend un flotteur situé au voisinage du niveau moyen du plan d'eau. Ceci permet une récupération conjuguée d'énergie cinétique et d'énergie potentielle relatives à l'onde de houle. Ces dispositifs, fixés dans le fond marin, ne peuvent être implantés qu'à proximité immédiate de rivages, et sur des sites de faibles profondeurs. Ils sont efficaces seulement pour une houle d'une longueur d'onde fixée, de direction perpendiculaire à l'axe de rotation des volets, et de période accordée à leur mode propre d'oscillation. Leur efficacité diminue très significativement dès que le spectre de houle s'éloigne de cette configuration idéale ou en cas de houles croisées.

Il existe encore des dispositifs à colonnes d'eau oscillantes, ou à pistons, par exemple celui de WO 2015/102547 ou celui de GB 2 429 243. Un tel dispositif récupère l'énergie, non pas en actionnant un système hydraulique intermédiaire, mais à partir du flux d'air chassé ou aspiré par une colonne d'eau animée par la houle. Certains dispositifs sont fondés sur des cylindres dans lesquels se meuvent des pistons qui séparent l'eau de l'air. D'autres dispositifs de ce type sont constitués d'une cavité aménagée sur un rivage soumis à la houle, dont la partie inférieure, immergée en permanence et librement ouverte, permet à l'eau de s'engouffrer dans la cavité à chaque vague. L'air de la cavité est alors chassé au travers d'une turbine à flux alternatif de type Wells, qui permet la récupération sous forme d'énergie électrique d'un fluide passant alternativement dans un sens ou dans un autre. En effet, lorsque la vague se retire, l'eau redescend dans la colonne, en générant une aspiration de l'air de l'atmosphère, lequel passe en sens inverse dans la turbine. Ce type de dispositif ne peut être installé que sur un rivage dont la topographie est adaptée. De tels rivages sont rares. Par ailleurs, le flux d'air alternatif impose l'utilisation d'une turbine aérienne à flux alternatif de type Wells, dont le rendement est significativement inférieur au rendement d'une turbine à flux unidirectionnel et régulier.

Une variante de ce dispositif est constituée d'une file de caissons sans fonds incorporés à une sculpture fixe ou flottante. La base des caissons est immergée, alors que la partie supérieure de chaque caisson est en communication avec deux collecteurs d'air latéraux pourvus de clapets. Le sens d'ouverture des clapets est tel que l'air poussé par l'eau qui monte dans un caisson au passage d'une vague est chassé dans l'un des collecteurs, alors qu'un autre collecteur symétrique alimente en air les caissons dont le niveau d'eau descend. Une turbine aérienne est installée sur une veine reliant les deux collecteurs en extrémité de la file de caissons, animée ainsi par un flux d'air unidirectionnel. Ces dispositifs ne permettent pas de récupérer l'énergie des composantes de la houle dont la longueur d'onde est inférieure ou voisine de la longueur de chaque caisson. Ils ne permettent une récupération d'énergie efficace que pour les composantes spectrales de la houle orientées dans la même direction que la file de caissons.

Parmi les dispositifs à colonnes d'eau, FR 2 959 780 décrit un dispositif de récupération d'énergie des vagues. Ce dispositif comporte une structure creuse destinée à être maintenue au-dessus de la surface de l'eau, avec un volume intérieur de cette structure qui communique avec un groupe turbo générateur. La structure est associée à une série de rideaux de tubes alignés, ouverts en leurs extrémités inférieures qui plongent dans l'eau. Chaque tube a un premier clapet unidirectionnel qui ouvre de l'intérieur du tube vers le volume intérieur, et un second clapet unidirectionnel qui ouvre de l'extérieur du dispositif vers l'intérieur du tube, pour former un dispositif de récupération d'énergie qui fonctionne en colonnes d'eau oscillantes.

Le Demandeur s'est attaché à améliorer ce genre de dispositifs.

Selon ce qui est proposé :
- une structure creuse comprend un caisson inférieur et un caisson supérieur superposés, plats, compacts, sensiblement indéformables, fermés et remplis d'un gaz,
- une multiplicité de tubes équipés de deux clapets en leur partie supérieure et traversent le caisson inférieur et aboutissent dans le caisson supérieur, et
- le groupe turbo générateur est monté dans un passage qui interconnecte les deux caissons.

En fonctionnement, le premier clapet permet la chasse du gaz qui surmonte l'eau vers le caisson supérieur du fait de la montée du niveau d'eau dans certains des tubes sous l'effet d'une vague ; le gaz ainsi chassé passe au travers du groupe turbo générateur, puis retourne en aval dans le caisson inférieur pour être admis par aspiration dans les tubes pour lesquels le niveau d'eau est descendant.

D'autres caractéristiques, détails et avantages de l'invention apparaîtront à la lecture de la description détaillée ci-après, et des dessins annexés, sur lesquels :
- la figure 1 montre un exemple de réalisation d'un dispositif selon l'invention ;
- la figure 2 montre une vue en coupe du dispositif de la figure 1 ;
- la figure 3 montre une vue en écorché d'un détail de l'invention ;
- la figure 4 montre un exemple de réalisation d'un module d'un dispositif selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Par caissons « plats », on entend notamment des caissons présentant une hauteur faible devant les dimensions horizontales telles que la largeur et la longueur du dispositif. Par caissons « compacts », on entend notamment un ensemble de caissons qui présente une largeur du même ordre de grandeur que sa longueur. En section horizontale, les caissons peuvent être de forme discoïdale ou carrée ou ellipsoïdale, par opposition au style « digue » ou « porte-avion », les formes allongées étant inévitablement optimisées par rapport à une direction spécifique de la vague, alors que l'invention ambitionne d'exploiter un plus large spectre de houles (en directions et fréquences, y compris houles « multiples » ou « stationnaires »). Toutefois, il pourrait en être autrement si le dispositif a vocation à naviguer.

Ces propositions améliorent les dispositifs à colonnes d'eau oscillante connus pour les rendre plus efficaces dans des conditions variées de houle, notamment en fonction de ses longueurs d'ondes et de l'orientation dans l'espace de ses composantes spectrales.

D'un autre point de vue, le dispositif selon l'invention comprend un réseau constitué d'un grand nombre de tubes analogues, répartis sur une surface de faible allongement, soit de largeur du même ordre de grandeur que la longueur, formant donc un volume que l'on appelle ici « compact ». Les tubes peuvent s'étendre sensiblement parallèlement les uns aux autres et à la perpendiculaire de leur surface de répartition. Ils peuvent être identiques, ou de diamètres variables en restant sensiblement identiques, au moins statistiquement, c'est-à-dire que l'on a une gamme de diamètres, répartis autour d'une valeur moyenne, ou nominale. La partie inférieure de chaque tube est ouverte et plonge dans l'eau, et la partie supérieure est encastrée dans une structure formée de deux caissons superposés de faibles hauteurs.

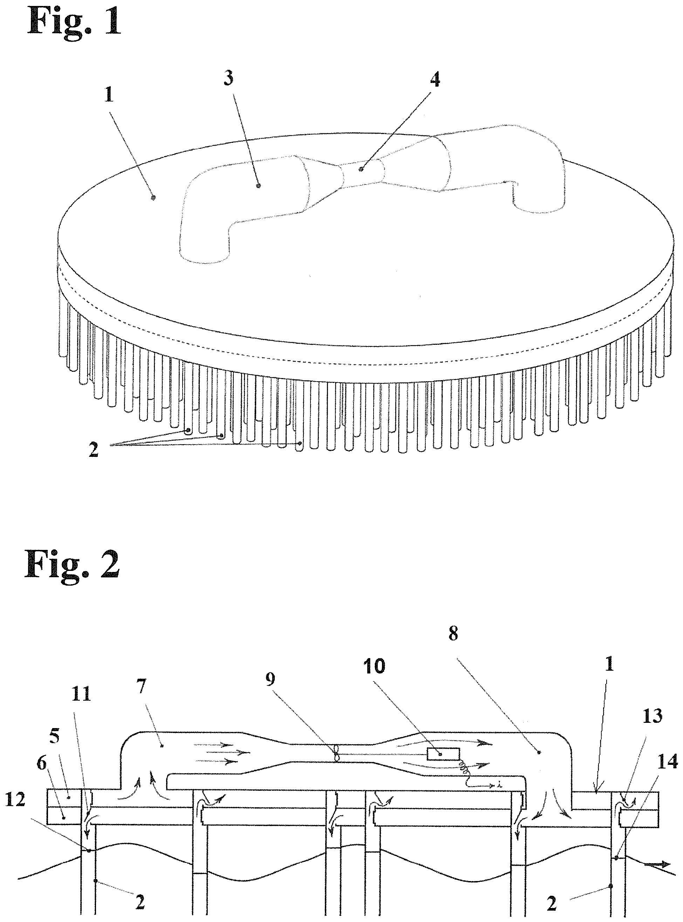

Il est maintenant fait référence aux figures 1 à 3. Un mode de réalisation du dispositif selon l'invention comprend une structure 1 creuse et des tubes 2 creux. La structure creuse 1 inclut un caisson supérieur 5 et un caisson inférieur 6.

La partie supérieure de chaque tube 2 comporte au moins deux clapets unidirectionnels :
- un premier clapet 13 d'admission, ici un clapet supérieur à battant, qui permet à l'air repoussé par le front de vague montant d'être chassé dans un premier caisson, ici le caisson supérieur 5, et
- un second clapet 11 de refoulement, ici clapet inférieur à battant, permettant à l'air du second caisson, ici le caisson inférieur 6, d'être admis dans le tube 2 lorsque le niveau d'eau entourant localement le tube 2 descend.

Les clapets 11, 13 d'admission et de refoulement sont agencés pour s'ouvrir sous l'effet de différences de pressions faibles, et permettre des débits les plus importants possibles. Ils sont de plus choisis pour que les pertes de charge soient comparables à l'admission et au refoulement.

Les deux caissons 5, 6 sont raccordés l'un à l'autre par un passage dans lequel est monté un groupe turbo générateur 9, 10. Le groupe turbo générateur 9, 10 comprend une turbine aérienne classique 9, destinée à tourner toujours dans le même sens, et qui entraîne le générateur 10 de courant permettant la récupération d'énergie.

Dans l'exemple des figures 1 et 2, le dispositif est une version flottante. La structure creuse 1 présente une emprise circulaire et forme alors une plate-forme flottante. La structure 1 présente, ici, un diamètre d'environ 100 mètres pour une hauteur entre une face supérieure et une face inférieure d'environ 5 mètres.

Le passage dans lequel est monté le groupe turbo générateur 9, 10 prend la forme d'une conduite 3 en forme de « U » retourné, construite en superstructure et montée sur le caisson supérieur 5. Comme cela est représenté en partie droite de la figure 2, la portion de la conduite 3 en aval du groupe turbo générateur 9, 10 traverse de part en part et de manière étanche le caisson supérieur 5 pour déboucher dans le caisson inférieur 6. La conduite 3 inclut une portion de travail 4, de section réduite par rapport au reste de la conduite 5, dans laquelle est implantée la turbine aérienne.

Les parties supérieures des tubes 2 sont encastrées dans la structure creuse 1. Elles traversent le caisson inférieur 6 jusqu'au caisson supérieur 5. Dans l'exemple décrit ici, le dispositif comprend une forêt de 2 500 à 3 000 tubes 2, d'un diamètre individuel d'environ 1,2 mètre et présentant des longueurs d'environ 11 mètres depuis la face inférieure du caisson inférieur 6 jusqu'à leur extrémité inférieure immergée, auxquels s'ajoutent au moins la hauteur du caisson inférieur 6, ici environ 2,5 mètres. Le maillage du réseau de tubes 2 n'est pas rigoureusement régulier. L'efficacité du dispositif est assurée y compris avec une implantation de tubes 2 aléatoirement répartis sur l'emprise de la structure 1, pourvu que la densité de tubes 2 demeure du même ordre sur toute la surface.

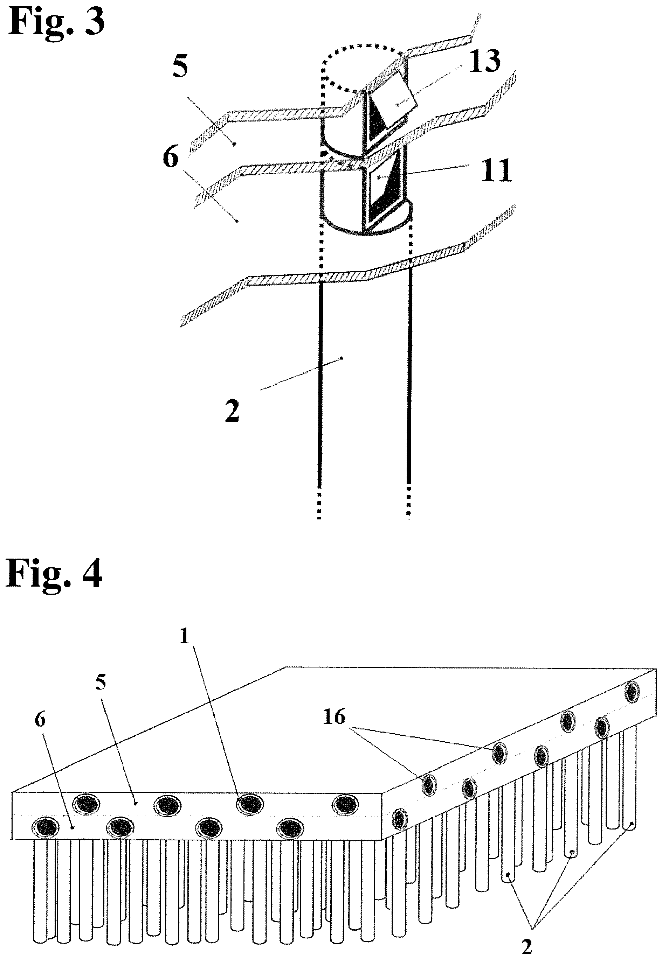

La figure 3 montre le détail d'une partie supérieure de l'un des tubes 2, partie où il est encastré au travers des caissons supérieur 5 et inférieur 6. Le tube 2 présente une section tronquée permettant d'obtenir une face plane. Cette face plane est équipée des deux clapets unidirectionnels d'admission 13 et de refoulement 11. Le clapet de refoulement 11 s'ouvre du caisson inférieur 6 vers l'intérieur du tube 2 lorsque le niveau d'eau dans le tube 2 descend tandis que le clapet d'admission 13 s'ouvre de l'intérieur du tube 2 vers le caisson supérieur 5 lorsque le niveau d'eau monte dans le tube 2.

Certains tubes en périphérie de la structure 1 sont analogues aux tubes 2 creux et sont en outre obstrués à proximité de leur extrémité inférieure, de manière étanche et afin d'y piéger du gaz. Ces tubes obstrués forment alors des flotteurs.

Le dispositif selon ce mode de réalisation est ancré au fond marin par des lignes d'ancrage via des attaches non représentées. Le niveau de flottaison du dispositif est ajusté en adoptant le nombre et le volume de flotteurs appropriés en périphérie et/ou en injectant un gaz neutre ou de l'air comprimé dans les caissons 5, 6, de sorte que le niveau moyen de la mer se situe approximativement à mi-hauteur de la longueur dépassante des tubes 2. Un ensemble d'injection de gaz sous pression et de purge de gaz peut être prévu pour maintenir une pression de manière maîtrisée, de manière à régler la hauteur de flottaison. Cet ensemble fonctionne de manière analogue à celui mis en œuvre dans les sous-marins pour ajuster leur profondeur d'immersion. Il comprend, par exemple, des ballasts dont on peut chasser l'eau grâce à l'injection d'air comprimé.

Sur la figure 2, les mouvements sont représentés par des flèches. En partie inférieure droite, une flèche indique l'orientation de la progression des vagues ou onde de houle, soit de la gauche vers la droite. La portion droite de chaque vague sur la figure 2 constitue donc un front de vague. La surface libre d'eau 14 correspondante dans un premier ensemble de tubes 2 est en phase montante. À l'inverse, la portion gauche sur la figure 2 de chaque vague constitue un dos de vague. La surface libre d'eau 12 correspondante dans un second ensemble de tubes 2 est en phase descendante. L'installation peut être soumise à n'importe quel spectre de houle, et en particulier des ondes stationnaires.

La surface libre d'eau 14 montante à l'intérieur du tube 2 chasse l'air à travers le premier clapet 13 d'admission, alimentant ainsi le caisson supérieur 5. Le caisson supérieur 5 présente ainsi une surpression continue compte tenu du grand nombre de tubes 2. Statistiquement et grâce à une répartition sensiblement homogène des tubes 2 sur l'emprise de la structure 1, environ la moitié des tubes 2 voit la surface libre d'eau 14 monter tandis que l'autre moitié des tubes 2 voit la surface libre d'eau 12 descendre à chaque instant. La surpression dans le caisson supérieur 5 est alors en outre sensiblement constante.

La surface libre d'eau 12 descendante à l'intérieur du tube 2 aspire l'air à travers le second clapet 11 de refoulement depuis le caisson inférieur 6. Le caisson inférieur 6 présente ainsi une dépression continue, sensiblement constante et strictement inférieure à la pression à l'intérieur du caisson supérieur 5.

Le flux d'air global ainsi formé et représenté par plusieurs flèches en figure 2,
- s'écoule depuis des tubes 2 dans lesquels la surface libre d'eau 14 monte,
- passe par les premiers clapets 13 d'admission dans le caisson supérieur 5,
- passe par une portion de collecteur amont 7 de la conduite 3,
- traverse la portion de travail 4 en activant la turbine 9,
- est récupéré par une portion de collecteur aval 8 de la conduite 3,
- est chassé dans le caisson inférieur 6, et
- est aspiré dans d'autres tubes 2 dans lesquels la surface libre d'eau 12 descend en passant par les seconds clapets 11 de refoulement.

Les différences de pression assurent la circulation de l'air. Néanmoins, la valeur moyenne, ou statique, des pressions dans les caissons 5, 6 par rapport à la pression atmosphérique peut être adaptée pour ajuster la flottabilité de la structure 1, c'est-à-dire la position de sa ligne de flottaison. Par exemple, la différence entre la dépression dans le caisson inférieur 6 et la pression atmosphérique peut être sensiblement égale à la différence entre la surpression dans le caisson 5 et la pression atmosphérique. Dans ce cas, la flottabilité de la structure 1 est assurée essentiellement par des flotteurs. Dans un autre exemple, la pression moyenne dans l'ensemble de la structure 1 est maintenue supérieure à la pression atmosphérique. La structure 1 est en surpression. Dans ce cas, la surpression participe significativement à la poussée d'Archimède. La structure 1 peut alors être dépourvue de flotteurs.

La flottabilité du dispositif est assurée au moins en partie par la présence de gaz, ici de l'air, emprisonné dans les tubes 2 et les deux caissons 5, 6, l'air circulant en circuit fermé entre les caissons 5, 6, et la conduite 3 les tubes 2 du réseau. La stabilité du dispositif, sa résistance au basculement, est améliorée en dotant la périphérie de la structure 1 de flotteurs d'une forme peu perturbante pour la houle, par exemple en condamnant quelques tubes de périphérie par obstruction de leurs extrémités comme décrits ci-avant ou encore par l'ajout d'autres types de flotteurs.

En variante, l'agencement du caisson supérieur 5 et du caisson inférieur 6 sont inversés de sorte que le caisson supérieur 5 est en aval du groupe turbo générateur 9, 10 alors que le caisson inférieur 6 est en amont. Le sens d'ouverture des clapets 11, 13 est alors inversé.

En variante, la turbine 9 et/ou le générateur 10 sont disposés dans la portion formant collecteur 7 en amont ou dans la portion formant collecteur 8 en aval, par exemple par le biais d'entretoises les supportant. La turbine 9 entraîne le générateur 10 par un arbre rigide horizontal. Dans une autre variante, la turbine 9 est disposée sensiblement à l'interface des deux caissons 5, 6, par exemple dans une découpe ménagée dans une paroi séparant les deux caissons 5, 6, et de sorte que son axe de rotation soit sensiblement vertical, dans une zone dépourvue de tubes 2. Cette disposition permet de réduire le fardage de l'ouvrage et de rendre plus aisée la maintenance du générateur 10, qui est alors implanté sur le caisson supérieur 5, et entraîné par la roue de turbine 9 via l'arbre vertical.

Les dimensions des principaux constituants du dispositif peuvent être sélectionnées vis-à-vis du spectre de houle du lieu d'implantation choisi. Le dispositif permet la récupération d'énergie pour toutes les composantes de houles dont la longueur d'onde est comprise entre environ deux fois le diamètre adopté pour les tubes 2, et la dimension générale d'encombrement de la plate-forme formée par le dispositif. Le diamètre, ou le diamètre moyen, ou nominal, le cas échéant, des tubes 2 est donc choisi en considérant le spectre de houle du site sur lequel sera implanté le dispositif. Le diamètre est de préférence de l'ordre de la moitié de la plus petite longueur d'onde significativement présente dans le spectre. Le nombre de tubes 2, typiquement plusieurs centaines, voire plusieurs milliers, est défini de sorte que l'aire en section horizontale de l'ensemble des tubes 2 n'excède pas la moitié de la surface de l'emprise du dispositif.

Dans l'exemple des figures 1 et 2, le dispositif est conçu pour former une plate-forme flottante autonome. En variante, le dispositif forme une plate-forme fixe solidaire du rivage ou du fond marin, en formant par exemple une jetée. Il peut aussi constituer une plate-forme annexe destinée à être attachée à un engin flottant pour alimenter celui-ci en électricité. Les dispositifs fixes selon l'invention peuvent être implantés sur des sites à marnage important, auquel cas ils produisent de l'énergie pendant une partie du marnage, soit tant que les extrémités inférieures des tubes 2 plongent dans l'eau.

Dans le cas où le dispositif forme une plate-forme flottante autonome, celle-ci peut être amarrée par un système d'ancrage, à proximité du littoral en évitant toutefois les zones de déferlement, ou bien en un site plus éloigné du littoral.

Alternativement à un ancrage, la structure 1 flottante peut être maintenue en un lieu fixe par un mécanisme lui permettant de coulisser verticalement le long d'un pylône central fixé au fond et traversant la structure 1 et/ou le long de plusieurs piliers en périphérie. Dans ces cas, la stabilité au basculement est aussi assurée par le guidage mécanique de la structure 1 le long des piliers fixés au fond.

L'électricité produite par la génératrice 10 est acheminée à terre par un câble sous-marin pour débiter dans un réseau, ou peut être auto consommée par l'engin flottant auquel le dispositif est couplé, par exemple une plate-forme de forage, ou un navire.

Les tubes 2 du réseau peuvent être fabriqués à partir de matériaux peu onéreux, ou de tubes déjà actuellement fabriqués en grandes séries, par exemple en acier, fonte, matériaux composites, matières plastiques ou béton armé.

Les caissons 5, 6 peuvent être fabriqués à partir de matériaux peu onéreux tels que l'acier, certains matériaux composites, ou le béton armé.

Dans le cas d'une version flottante du dispositif, l'air interne circulant en circuit fermé peut être remplacé par de l'azote ou un mélange gazeux appauvri en oxygène actif, de sorte que la corrosion et le développement d'organismes vivants dans les parties internes du dispositif sont empêchés.

Dans le cas d'une version fixe du dispositif solidaire du rivage, les longueurs d'ondes de houles supérieures à la dimension principale de la plate-forme sont susceptibles de créer des surpressions ou des dépressions de l'ensemble de deux caissons 5, 6 car l'ensemble du réseau de tubes 2 est alors approximativement sollicité en phase. Afin de poursuivre la production d'énergie, y compris dans ces situations, le caisson inférieur 6 du dispositif peut être équipé d'une soupape de décharge à grand débit tarée à une pression d'ouverture correspondant à une hauteur d'eau de l'ordre de la moitié de la longueur libre des tubes 2 sous les caissons 5, 6. Le caisson supérieur 5 peut quant à lui être équipé d'une soupape à grand débit d'admission d'air extérieur, tarée à une dépression équivalant à cette même hauteur d'eau. Ces soupapes ne s'ouvrent qu'en cas de surpression ou de dépression provoquées par une montée ou une descente en phase de l'eau dans une majorité de tubes.

Dans le cas d'une version flottante du dispositif soumis à des houles de longueurs d'ondes supérieures aux dimensions de la plate-forme, cette dernière suit les mouvements moyens de la surface de l'eau et les risques de surpression ou de mise en dépression des caissons 5, 6 par montée ou descente en phase de l'eau dans l'ensemble du réseau de tubes 2 sont inexistants.

Le dispositif peut être construit par assemblage de plusieurs modules, notamment par juxtaposition.

Il est maintenant fait référence à la figure 4 représentant un module à assemblage par juxtaposition. Un module principal, de préférence d'emprise polygonale, comprend en particulier le groupe turbogénérateur 9, 10. Des modules annexes présentant des bords ou faces latérales en correspondance avec ceux du module principal lui sont assemblés. Un tel module annexe est représenté en figure 4, ici de forme carrée. Le module annexe peut être dépourvu de groupe turbogénérateur 9, 10.

Les modules sont fixés entre eux sur leurs côtés. Chaque module comprend des ouvertures 16 agencées dans les faces latérales pour venir en regard d'ouvertures correspondantes du module voisin. Les ouvertures 16 permettent la communication fluidique d'une part entre l'ensemble des caissons supérieurs 5 et d'autre part entre l'ensemble des caissons inférieurs 6 à l'état assemblé du dispositif.

Dans l'exemple décrit ici, les ouvertures 16 sont équipées de brides étanches. Ces liaisons ont une fonction d'acheminement des flux d'air permettant le fonctionnement du dispositif.

Un dispositif composé de plusieurs modules assemblés les uns aux autres permet une construction dans des ateliers de dimensions limitées sous forme de kit à assembler à proximité du site d'exploitation, ou sur le site lui-même. Ainsi, le transport et l'acheminement jusqu'au site d'assemblage est facilité. Une telle conception sous forme de kit de modules à assembler permet en outre une fabrication de série des modules tout en permettant d'adapter la forme et l'étendue du dispositif assemblé sur place en fonction des situations.

L'étanchéité périphérique du dispositif à l'état assemblé est obtenue en fermant de manière étanche les ouvertures périphériques 16 non utilisées, ici par des tapes étanches boulonnées.

Un dispositif selon l'invention présente les avantages suivants vis-à-vis des dispositifs déjà connus :
- Il permet la récupération d'énergie sur un large spectre de houles, aussi bien en termes de longueurs d'ondes qu'en termes d'orientations. Il autorise en particulier une récupération efficace d'énergie en situation de houles conjuguées, croisées ou stationnaires, de clapot ou encore en cas d'orientation différente de la houle vis-à-vis d'un éventuel courant marin local.
- Il comprend intrinsèquement sa propre capacité de flottaison, grâce au gaz de son circuit de récupération d'énergie. La présence de flotteurs périphériques améliore la stabilité dynamique de redressement vis-à-vis de la gîte en l'absence de guidage. Lorsqu'il est guidé verticalement le long de piliers fixes, les flotteurs sont superflus.
- Le dispositif présente un faible coût de construction car il peut être construit à partir de produits manufacturés de grandes séries existants, notamment pour les tubes. Par ailleurs, il est dépourvu de pièce mobile travaillant en immersion.
- Le dispositif présente une grande robustesse et une grande fiabilité intrinsèques, en raison de sa simplicité, et du fait qu'il ne comporte que des composants mécaniques mobiles passifs, constitués des clapets, lesquels travaillent dans la partie aérienne de l'installation. Le dispositif fonctionne sans système à pistons ou vérins.
- Le dispositif présente des coûts de maintenance faibles, son groupe turbo générateur étant émergé et donc facilement accessible.
- Le dispositif, en particulier lorsqu'il est flottant, présente une excellente résistance aux intempéries et aux tempêtes, grâce à son faible fardage et à sa flottabilité intrinsèque.
- Le dispositif peut être construit de manière modulaire, chaque module présentant des dimensions telles qu'elles permettent une construction, un levage et un acheminement plus aisés qu'un dispositif fabriqué d'un seul tenant. Ce mode de construction permet par ailleurs, par ajout de modules, d'augmenter la puissance d'une installation existante avec un investissement additionnel réduit. Une telle construction modulaire est adaptable à volonté.
- Lorsque le circuit de gaz est fermé, un gaz ou un mélange dépourvu d'oxygène en lieu et place de l'air peut être mis en œuvre, ce qui limite les phénomènes de corrosion interne et d'invasion par des organismes végétaux ou des animaux marins.

L'invention ne se limite ni aux exemples de dispositifs décrits ci-avant, seulement à titre d'exemple, ni aux diverses combinaisons de variantes mais elle englobe toutes les variantes que pourra envisager l'homme de l'art dans le cadre des revendications ci-après.

## Revendications

1. Dispositif de récupération d'énergie des vagues, comportant une structure creuse (1) destinée à être maintenue au-dessus de la surface d'une étendue d'eau, un volume intérieur de la structure (1) communiquant avec un groupe turbo générateur (9, 10), la structure (1) étant associée à une multiplicité de tubes creux (2) ouverts en leurs extrémités inférieures qui plongent dans l'eau, chaque tube (2) ayant un premier clapet unidirectionnel (13) qui ouvre de l'intérieur du tube (2) vers le volume intérieur, et un second clapet unidirectionnel (11) qui ouvre depuis l'aval du groupe turbo générateur (9, 10) vers l'intérieur du tube (2), pour former une boucle de récupération d'énergie qui fonctionne en colonnes d'eau oscillantes, en interaction avec le groupe turbo générateur (9, 10),
**caractérisé en ce que** la structure (1) comprend un caisson inférieur (6) et un caisson supérieur (5) superposés, plats, compacts, sensiblement indéformables, fermés et remplis d'un gaz, **en ce que** les tubes (2) traversent le caisson inférieur (6) et aboutissent dans le caisson supérieur (5), et **en ce que** le groupe turbo générateur (9, 10) est monté dans un passage qui interconnecte les deux caissons (5, 6),
le premier clapet (13) d'un tube (2) permettant au gaz qui surmonte l'eau d'être chassé depuis le tube (2) vers le caisson supérieur (5) du fait de la montée du niveau d'eau (14) dans certains des tubes sous l'effet d'une vague, le gaz ainsi chassé passant au travers du groupe turbo générateur (9, 10), puis retournant en aval dans le caisson inférieur (6) pour être admis par aspiration dans les tubes (2) par l'intermédiaire du second clapet (11) pour lesquels le niveau d'eau (12) est descendant.

2. Dispositif selon la revendication 1, comprenant en outre des organes de flottaison pour assurer le maintien de la structure (1) au-dessus de la surface de l'eau.

3. Dispositif selon la revendication 2, comprenant en outre des lignes d'ancrages par l'intermédiaire desquelles la structure (1) peut être arrimée à un fond marin.

4. Dispositif selon l'une des revendications 2 et 3, dans lequel les organes de flottaison comprennent des flotteurs semi-immergés disposés en périphérie inférieure de la structure (1), de sorte que le niveau moyen de la surface de l'eau se situe approximativement à mi-hauteur de la partie des tubes (2) qui dépasse sous le caisson inférieur (6).

5. Dispositif selon la revendication 4, dans lequel certains au moins des flotteurs comprennent des tubes semblables à ceux de ladite multiplicité, obstruées en l'une de leurs extrémités.

6. Dispositif selon l'une des revendications 2 à 5, dans lequel les organes de flottaison comprennent un ensemble d'injection de gaz comprimé vers l'intérieur des caissons (5, 6) associé à une ou plusieurs purges de gaz de sorte que la pression moyenne interne soit maintenue à un niveau supérieur à la pression atmosphérique.

7. Dispositif selon l'une des revendications 2 à 6, dans lequel la structure (1) comprend au moins un passage vertical propre à recevoir un pylône fixé au fond marin et traversant la structure (1) de manière à former guidage vertical à coulissement de la structure (1) le long du pylône.

8. Dispositif selon l'une des revendications 2 à 6, dans lequel la structure (1) est guidée verticalement par plusieurs pylônes fixés au fond marin en périphérie de la structure (1), de manière à former guidage vertical à coulissement de la structure (1) le long des pylônes.

9. Dispositif selon l'une des revendications précédentes, dans lequel le circuit de gaz est fermé.

10. Dispositif selon la revendication 9, dans lequel le gaz est essentiellement constitué d'azote.

11. Dispositif selon la revendication 9, dans lequel le gaz est appauvri en oxygène.

12. Dispositif selon l'une des revendications 1 à 9, dans lequel le gaz comprend de l'air.

13. Dispositif selon la revendication 1, dans lequel la structure (1) est agencée de manière à être maintenue sensiblement immobile par rapport au fond marin et/ou au rivage.

14. Dispositif selon la revendication 13, dans lequel
- le caisson inférieur (6) comprend une soupape de décharge à grand débit s'ouvrant vers l'extérieur, configurée de manière à présenter une pression d'ouverture permettant d'évacuer le gaz chassé par une montée en phase du niveau d'eau dans l'ensemble des tubes (2), et/ou
- le caisson supérieur (5) comprend une soupape d'admission à grand débit s'ouvrant sur l'intérieur, configurée de manière à présenter une dépression d'ouverture permettant une aspiration d'air extérieur générée par une descente en phase du niveau d'eau dans l'ensemble des tubes (2).

15. Dispositif selon l'une des revendications précédentes, dans lequel le passage interconnectant les deux caissons (5, 6) est formé par deux portions (7, 8) de conduite (3) entre lesquelles s'interpose le groupe turbo générateur (9, 10).

16. Dispositif selon l'une des revendications 1 à 14, dans lequel le passage interconnectant les deux caissons (5, 6) est formé par une découpe dans une paroi séparant les deux caissons (5, 6), le groupe turbo générateur (9, 10) incluant une turbine à axe vertical logée dans ladite découpe.

17. Dispositif selon l'une des revendications précédentes, comprenant un assemblages de caissons supérieurs (5) et de caissons inférieurs (6), les caisson supérieurs (5) étant en communication fluidique les uns avec les autres, les caisson inférieurs (6) étant en communication fluidique les uns avec les autres, le groupe turbo générateur (9, 10) étant commun à l'ensemble des caissons (5, 6,) de l'assemblage.

## Patentansprüche

1. Vorrichtung zur Wellenenergiegewinnung, umfassend eine hohle Struktur (1), die dazu bestimmt ist, über der Oberfläche eines Wasserkörpers gehalten zu werden, wobei ein Innenvolumen der Struktur (1) mit einer Turbogeneratorgruppe (9, 10) in Verbindung steht, wobei die Struktur (1) einer Vielzahl von hohlen Rohren (2) zugeordnet ist, die an ihren unteren Enden offen sind und in das Wasser eintauchen, wobei jedes Rohr (2) ein erstes unidirektionales Ventil (13) aufweist, das sich von der Innenseite des Rohres (2) zum Innenvolumen öffnet, und ein zweites unidirektionales Ventil (11), das sich stromabwärtig von der Turbogeneratorgruppe (9, 10) zum Inneren des Rohres (2) öffnet, um in Wechselwirkung mit der Turbogeneratorgruppe (9, 10) eine Energiegewinnungsschleife zu bilden, die in oszillierenden Wassersäulen arbeitet,
**dadurch gekennzeichnet, dass** die Struktur (1) einen unteren Kasten (6) und einen oberen Kasten (5) umfasst, die übereinander angeordnet, flach, kompakt, im Wesentlichen nicht verformbar, geschlossen und mit einem Gas gefüllt sind, **dadurch, dass** die Rohre (2) durch den unteren Kasten (6) hindurchgehen und in dem oberen Kasten (5) enden, und **dadurch, dass** die Turbogeneratorgruppe (9, 10) in einem Durchgang montiert ist, der die beiden Kasten (5, 6) verbindet,
wobei das erste Ventil (13) eines Rohres (2) es dem Gas, welches sich über dem Wasser befindet, ermöglicht, aufgrund des steigenden Wasserpegels (14) in einigen der Rohre unter der Wirkung einer Welle, aus dem Rohr (2) in den oberen Kasten (5) verdrängt zu werden, wobei das so verdrängte Gas durch die Turbogeneratorgruppe (9, 10) strömt, dann stromabwärts in den unteren Kasten (6) zurückkehrt, um mittels des zweiten Ventils (11) in die Rohre (2) gesaugt werden zu können, für die der Wasserpegel (12) fällt.

2. Vorrichtung nach Anspruch 1, ferner umfassend Flotationselemente, um das Halten der Struktur (1) über der Wasseroberfläche zu gewährleisten.

3. Vorrichtung nach Anspruch 2, ferner umfassend Ankerleinen, mittels derer die Struktur (1) an einem Meeresboden befestigt werden kann.

4. Vorrichtung nach einem der Ansprüche 2 und 3, wobei die Flotationselemente halbeingetauchte Schwimmer umfassen, die am unteren Umfang der Struktur (1) angeordnet sind, so dass der durchschnittliche Pegel der Wasseroberfläche etwa die Hälfte des Teils der Rohre (2) beträgt, der unter den unteren Kasten (6) ragt.

5. Vorrichtung nach Anspruch 4, wobei mindestens einige der Schwimmer Rohre umfassen, die denen der Vielzahl ähnlich sind, die an einem ihrer Enden blockiert sind.

6. Vorrichtung nach einem der Ansprüche 2 bis 5, wobei die Flotationselemente eine Druckgaseinspritzanordnung zum Inneren der Kästen (5, 6) umfassen, die einer oder mehreren Gasspülungen zugeordnet ist, so dass der durchschnittliche Innendruck auf einem Pegel gehalten wird, der höher als der Atmosphärendruck ist.

7. Vorrichtung nach einem der Ansprüche 2 bis 6, wobei die Struktur (1) mindestens einen vertikalen Durchgang umfasst, der geeignet ist, einen Pylon aufzunehmen, der am Meeresboden befestigt ist und durch die Struktur (1) verläuft, um eine gleitende vertikale Führung der Struktur (1) entlang des Pylons zu bilden.

8. Vorrichtung nach einem der Ansprüche 2 bis 6, wobei die Struktur (1) vertikal durch mehrere am Meeresboden am Umfang der Struktur (1) befestigte Pylone geführt wird, um so eine gleitende vertikale Führung der Struktur (1) entlang der Pylone zu bilden.

9. Vorrichtung nach einem der vorstehenden Ansprüche, wobei der Gaskreislauf geschlossen ist.

10. Vorrichtung nach Anspruch 9, wobei das Gas hauptsächlich aus Stickstoff besteht.

11. Vorrichtung nach Anspruch 9, wobei das Gas sauerstoffverarmt ist.

12. Vorrichtung nach einem der Ansprüche 1 bis 9, wobei das Gas Luft umfasst.

13. Vorrichtung nach Anspruch 1, wobei die Struktur (1) so angeordnet ist, um in Bezug auf den Meeresboden und/oder das Ufer im Wesentlichen unbeweglich gehalten zu werden.

14. Vorrichtung nach Anspruch 13, wobei
- der untere Kasten (6) ein nach außen öffnendes Hochdurchfluss-Auslassventil umfasst, das konfiguriert ist, um einen Öffnungsdruck aufzuweisen, der es ermöglicht, das durch einen Phasenanstieg des Wasserpegels in allen Rohren (2) verdrängte Gas abzuleiten, und/oder
- der obere Kasten (5) ein nach innen öffnendes Hochdurchfluss-Einlassventil umfasst, das konfiguriert ist, um einen Öffnungsunterdruck aufzuweisen, der es ermöglicht, die durch einen Phasenabfall des Wasserpegels erzeugte Außenluft in alle Rohre (2) anzusaugen.

15. Vorrichtung nach einem der vorstehenden Ansprüche, wobei der die zwei Kästen (5, 6) verbindende Durchgang durch zwei Abschnitte (7, 8) einer Leitung (3) gebildet wird, zwischen denen die Turbogeneratorgruppe (9, 10) angeordnet ist.

16. Vorrichtung nach einem der Ansprüche 1 bis 14, wobei der die zwei Kästen (5, 6) verbindende Durchgang durch einen Ausschnitt in einer die beiden Kästen (5, 6) trennenden Wand gebildet ist, wobei die Turbogeneratorgruppe (9, 10) eine in dem Ausschnitt untergebrachte Turbine mit vertikaler Achse aufweist.

17. Vorrichtung nach einem der vorstehenden Ansprüche, umfassend eine Anordnung von oberen Kästen (5) und unteren Kästen (6), wobei die oberen Kästen (5) in fluidischer Verbindung miteinander stehen, wobei die unteren Kästen (6) in fluidischer Verbindung miteinander stehen und die Turbogeneratorgruppe (9, 10) allen Kästen (5, 6,) der Anordnung gemeinsam ist.

## Claims

1. A device for collecting energy from the waves, including a hollow structure (1) intended to be held above the surface of a stretch of water, an internal volume of the structure (1) communicating with a turbine generator unit (9, 10), the structure (1) being associated with a plurality of hollow tubes (2), open at their lower ends, which are immersed in the water, each tube (2) having a first unidirectional valve (13) that opens from the inside of the tube (2) towards the internal volume, and a second unidirectional valve (11) that opens from downstream of the turbine generator unit (9, 10) towards the inside of the tube (2) so as to form a loop for collecting energy that functions as oscillating columns of water, interacting with the turbine generator unit (9, 10),
**characterized in that** the structure (1) comprises a lower caisson (6) and an upper caisson (5), superposed, flat, compact, substantially distortion-free, closed and filled with a gas, **in that** the tubes (2) pass through the lower caisson (6) and terminate in the upper caisson (5), and **in that** the turbine generator unit (9, 10) is assembled in a passage that interconnects the two caissons (5, 6).
the first valve (13) of a tube (2) allowing the gas that is above the water to be driven from the tube (2) towards the upper caisson (5) due to the rise in water level (14) in some of the tubes under the effect of a wave, the gas thus driven passing through the turbine generator unit (9, 10), then returning downstream into the lower caisson (6) to be admitted by suction into tubes (2) in which the water level (12) is falling.

2. The device as claimed in claim 1, furthermore comprising flotation components for ensuring that the structure (1) is held above the surface of the water.

3. The device as claimed in claim 2, furthermore comprising anchoring lines by means of which the structure (1) can be moored to a seabed.

4. The device as claimed in either one of claims 2 and 3, wherein the flotation components comprise semi-submerged floats disposed at the lower periphery of the structure (1), such that the mean level of the surface of the water is situated approximately at mid-height of the part of the tubes (2) that protrudes below the lower caisson (6).

5. The device as claimed in claim 4, wherein at least some of the floats comprise tubes, obstructed at one of their ends, that are similar to those of said plurality.

6. The device as claimed in one of claims 2 to 5, wherein the floatation components comprise a kit for injecting compressed gas to the inside of the caissons (5, 6), kit associated with one or more gas purges such that the internal mean pressure is held at a level higher than the atmospheric pressure.

7. The device as claimed in one of claims 2 to 6, wherein the structure (1) comprises at least one vertical passage conducive to accommodating a mast secured to the seabed and passing through the structure (1) so as to provide vertical sliding guidance of the structure (1) along the mast.

8. The device as claimed in one of claims 2 to 6, wherein the structure (1) is vertically guided by several masts at the periphery of the structure (1), secured to the seabed, so as to provide vertical sliding guidance of the structure (1) along the masts.

9. The device as claimed in one of the preceding claims, wherein the gas circuit is closed.

10. The device as claimed in claim 9, wherein the gas essentially consists of nitrogen.

11. The device as claimed in claim 9, wherein the gas is depleted of oxygen.

12. The device as claimed in one of claims 1 to 9, wherein the gas comprises air.

13. The device as claimed in claim 1, wherein the structure (1) is arranged so as to be held substantially immobile relative to the seabed and/or to the shoreline.

14. The device as claimed in claim 13, wherein
- the lower caisson (6) comprises a high flow discharge valve opening towards the outside, configured so as to have an opening pressure allowing the evacuation of the gas driven by a phased rise of the water level in the set of tubes (2), and/or
- the upper caisson (5) comprises a high flow admission valve opening towards the inside, configured so as to have an opening low pressure allowing outside air to be drawn in, the drawing in generated by a phased fall of the water level in the set of tubes (2).

15. The device as claimed in one of the preceding claims, wherein the passage interconnecting the two caissons (5, 6) is formed by two portions (7, 8) of pipe (3) between which the turbine generator unit (9, 10) is interposed.

16. The device as claimed in one of claims 1 to 14, wherein the passage interconnecting the two caissons (5, 6) is formed by a cutout in a panel separating the two caissons (5, 6), the turbine generator unit (9, 10) including a vertical axis turbine accommodated in said cutout.

17. The device as claimed in one of the preceding claims, comprising an assembly of upper caissons (5) and lower caissons (6), the upper caissons (5) being in fluidic communication with each other, the lower caissons (6) being in fluidic communication with each other, the turbine generator unit (9, 10) being common to all of the caissons (5, 6) of the assembly.
